# EUROPEAN PATENT APPLICATION

(11) **EP 2 182 604 A1**
(43) Date of publication of application: **05.05.2010**
(21) Application number: 08105719.2
(22) Date of filing: 31.10.2008
(51) Int. Cl.: H02H 3/20, H02H 3/04

(54) **Electrical power supply monitoring apparatus**

(71) Applicant: Siemens AG, 80506 Munich (DE)
(72) Inventor: Kenney, Richard, Crewe, Cheshire CW1 5TY (GB)
(74) Representative: Morgan, Marc

(57) **Abstract**

An arrangement is provided in which a power supply monitoring circuit which monitors a power supply is itself monitored by a supervisor circuit. The supervisor circuit is coupled to a voltage reference input of the power supply monitoring circuit and is configured to vary the voltage at that input and is further coupled to a power supply status output of the monitoring circuit to monitor for a fault indication condition. In this way, the power supply monitoring circuit may be tested without having to affect the operation of the power supply unit.

## Description

This invention relates to electrical power supply monitoring apparatus.

Some types of electronic and electrical products are designed for functional safety and are termed safety integrated products. An assessment of their safety is made and expressed as a Safety Integration Level abbreviated to SIL. Products with a high SIL are designed to ensure that no single failure will result in a dangerous fault condition arising.

A common single point of failure is the power supply providing power to the control systems of such products. In a circuit architecture comprising a control processor (for example for controlling an AC motor or other equipment) and a supervisor processor, a power supply can be a single point of failure which will result in failure of both processors. For such an arrangement to achieve a high SIL rating, it will be necessary to monitor the power supply and to have a means of safely shutting down the operation of the processors, to place the product into a safe state, in the event of a failure.

Presently, a voltage supervisor circuit is used to monitor the power supply and to shut down the product if the power supply unit voltage is outside the acceptable limits. However, it will be appreciated that, to ensure maximum reliability, this requires the voltage supervisor circuit itself to be in some way monitored or tested to ensure that it is working properly. That, in itself, may require the power supply to be forced into a fault condition. These contradictory requirements limit the maximum SIL that may be achieved.

The present invention arose in an attempt to provide a supervisor circuit for a power supply which does not require a fault condition in the power supply unit to be induced for testing the satisfactory operation of the supervisor circuit itself.

According to the invention there is provided an electrical power supply monitoring apparatus comprising: a power supply monitoring circuit for monitoring a voltage level provided by a power supply and comparing it with a reference voltage level at a reference voltage input and in event of the voltage departing from a predetermined normal range producing a signal at a power supply status output indicative of an error condition; a supervisor circuit monitoring the power supply monitoring circuit comprising means coupled to the power supply status output and means coupled to the reference voltage input to vary the reference voltage input to simulate a voltage error condition in a test phase and means to output an error signal in the event of the power supply monitoring circuit failing to provide the output indicating an error condition during the test phase.

In the above described apparatus it is possible to test the operation of the first monitoring circuit without affecting the operation of the power supply unit. This is particularly advantageous for achieving a high Safety Integration Level.

A specific embodiment of the invention will now be described with reference to the drawings in which:

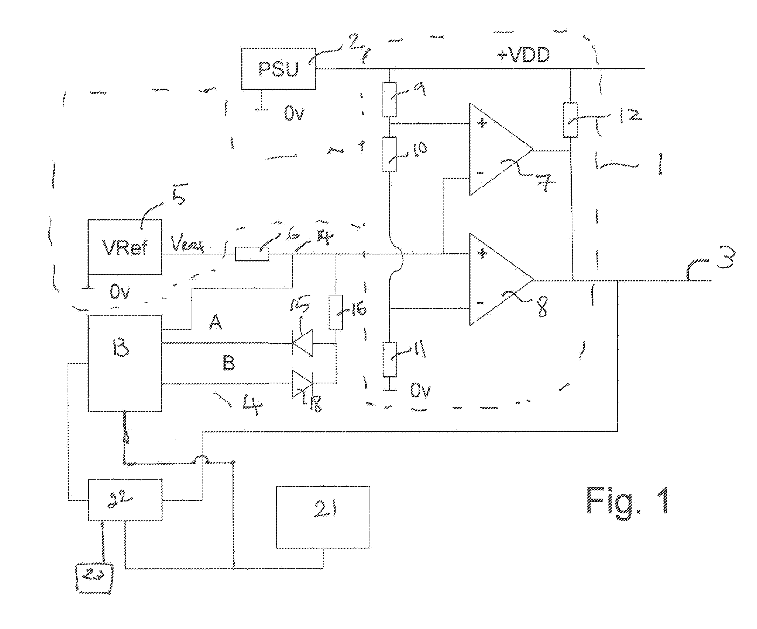

Figure 1 shows a specific embodiment of the invention.

As is shown in figure 1, a power supply monitoring circuit 1 is connected to a power supply 2 supplying electrical power to electrical equipment 21. The monitoring circuit 1 provides an indication at a power supply state output 3 which indicates whether or not that the power supply 2 is functioning satisfactorily.

A supervisor circuit 4 is provided which monitors the operation of the shut down circuit 22.

The power supply unit 2 is of a conventional construction, well known to the person skilled in the art, and it is connected to the upper rail +VDD and to the lower 0V rail.

The monitoring circuit 1 comprises a voltage reference Vref 5 coupled via a resistor 6 to a pair of comparators 7 and 8. The comparators 7 and 8 form a window comparator with resistors 9, 10 and 11 forming a voltage divider defining a high and a low voltage threshold at the positive and negative inputs at the comparators 7 and 8 respectively. The window comparator compares the voltage at VDD with the reference Vref to generate a VDD healthy signal at 3. Resistor 12 is a pull-up resistor. The values of 9, 10 and 11 and also Vref 5 will determine the maximum and minimum limit voltages for VDD.

It will be seen the supervisor circuit 4 includes a processor 13. This is a microprocessor programmed to provide the required functionality for supervising and also for controlling associated electronic equipment 21 by means of a shut down circuit 22. It could also be provided as hard wired logic in some embodiments. The processor 13 is connected to a monitor port at a point 14 between the resistor 6 and the window comparator. The processor 13 also provides outputs to nodes A and B. Node A is connected to a diode 15 which in turn is connected via a resistor 16 to the monitor junction 14 and the window comparator. Node B is connected to a diode 18 and hence via the resistor 16 to the same point.

In normal operation, node A is pulled high compared to the voltage reference 5 Vref and node B is pulled low. In this normal operation, should the power supply unit develop a fault then the voltage VDD will go beyond the desired limits and VDD Healthy signal output at voltage supply status output 3 is pulled low. This will be detected by the shut down circuit 22 which then initiates a shut down of the equipment 21.

In a testing operation, the processor 13 monitors the voltage at junction 14. It then enters a controlling operation in which the node A is pulled low. This causes the diode 15 to conduct and the voltage at junction 14 to be reduced. This simulates an overvoltage condition (because this would mimic an overvoltage condition in which the top rail voltage had increased relative to the Voltage reference). By pulling node B high the diode 18 conducts and the voltage at junction 14 increases. This simulates an undervoltage condition. For each case, this should cause a change at the output 3 and thus the output of 22 which is detected by the processor 13. This shows that the first monitoring circuit is functioning correctly. If no change is detected at the output of 22, then the processor 13 will initiate a safe state shutting down the equipment 21 by sending a message to the shut down circuit 22.

Thus this circuit arrangement is able to have a higher system safety integrity level (SIL) than would otherwise be the case.

It will be appreciated that the polarity of the voltage supply and the circuits may be reversed.

In order to maintain control via a completely independent path, the shutdown circuit 22 must be operated by a power supply 23 separate from power supply 2.

## Claims

1. An electrical power supply monitoring apparatus comprising: a power supply monitoring circuit for monitoring a voltage level provided by a power supply and comparing it with a reference voltage level at a reference voltage input and in event of the voltage departing from a predetermined normal range producing a signal at a power supply status output indicative of an error condition; a supervisor circuit monitoring the power supply monitoring circuit comprising means coupled to the power supply status output and means coupled to the reference voltage input to vary the reference voltage input to simulate a voltage error condition in a test phase and means to output an error signal in the event of the power supply monitoring circuit failing to provide the output indicating an error condition during the test phase.

2. Apparatus as claimed in claim 1 the means coupled to the reference voltage input is controllable to increase or decrease the voltage at the reference voltage input.

3. Apparatus as claimed in claim 2 wherein the means coupled to the reference voltage input is a processor.

4. Apparatus as claimed in claim 3 wherein the processor is coupled to a first and a second means being coupled to the reference voltage input and being operable to raise or lower the voltage at the reference voltage input.

5. Apparatus as claimed in claim 4 wherein the first or second means is a diode and a resistor connected in series.

6. Apparatus as claimed in any preceding claim wherein the supervisor circuit is coupled to the voltage reference to monitor the voltage provided by the voltage reference to the power supply monitoring circuit.

7. Apparatus as claimed in any preceding claim wherein the first monitoring circuit comprises comparators to compare the voltage produced by the power supply with that provided at the voltage reference input.

8. Apparatus as claimed in any preceding claim comprising a shutdown circuit responsive to the error signal to shut down electrical equipment to which the power supply in use is connected.
